# EUROPÄISCHE PATENTSCHRIFT

(11) **EP 1 003 655 B1**
(45) Veröffentlichungstag und Bekanntmachung des Hinweises auf die Patenterteilung: **18.06.2003**
(21) Anmeldenummer: 98942567.3
(22) Anmeldetag: 17.07.1998
(51) Int. Cl.: B60S 9/02

(54) **FAHRBARE ARBEITSMASCHINE MIT TELESKOPIERBAREN STÜTZAUSLEGERN**
MOBILE MACHINE WITH TELESCOPIC SUPPORT ARMS
MACHINE DE TRAVAIL MOBILE DOTEE DE BRAS D'APPUI TELESCOPIQUES

(30) Priorität: 21.08.1997 DE 19736108
(43) Veröffentlichungstag der Anmeldung: 31.05.2000
(73) Patentinhaber: PUTZMEISTER Aktiengesellschaft, 72631 Aichtal (DE)
(72) Erfinder: WOLFRAM, Markus, D-72631 Aichtal (DE); HÖNESS, Stephan, D-72820 Sonnenbühl (DE)
(74) Vertreter: Wolf, Eckhard, Dr.-Ing.
(86) Internationale Anmeldenummer: EP9804456
(87) Internationale Veröffentlichungsnummer: WO99010212

(56) Entgegenhaltungen:
- EP-B- 0 357 988
- WO-A-97/08026
- DE-A- 3 124 029
- DE-A- 4 344 779
- US-A- 2 740 538
- US-A- 4 609 204
- PATENT ABSTRACTS OF JAPAN vol. 005, no. 061 (M-065), 24. April 1981 & JP 56 013243 A (NISSAN DIESEL MOTOR CO LTD), 9. Februar 1981

## Beschreibung

Die Erfindung betrifft eine fahrbare Arbeitsmaschine mit einem mindestens eine Vorderachse und eine Hinterachse aufweisenden Fahrgestell, mindestens einem am Fahrgestell angeordneten, vorzugsweise horizontal ausgerichteten Teleskopsegment, und einem in dem Teleskopsegment zwischen einer eingezogenen Transportstellung und mindestens einer ausgestellten Abstützstellung verschiebbaren, an seinem freien Ende mit einem vorzugsweise ausfahrbaren Fußteil bodenseitig abstützbaren Stützausleger, wobei der Stützausleger zwei um eine zur Fahrgestellhochachse parallele Gelenkachse gegeneinander verschwenkbare Auslegerpartien aufweist, von denen die eine innere Auslegerpartie mit dem Teleskopsegment stets fluchtet, während die andere das Fußteil tragende äußere Auslegerpartie gegenüber der inneren Auslegerpartie um die Gelenkachse verschwenkbar ist, und wobei das fahrgestellfeste Teleskopsegment im Abstand hinter einem Führerhaus angeordnet ist.

Es ist eine als fahrbare Betonpumpe ausgebildete Arbeitsmaschine bekannt (EP-B 0 357 988), bei der zwei als Teleskopbeine ausgebildete, mit ihrem rohrförmigen Teleskopsegment an einem starr mit einem Mastbock verbundenen Fahrgestell angeordnete, diagonal nach vorne weisende Stützausleger vorgesehen sind, die zwischen einer eingezogenen Transportstellung und einer ausgestellten Abstützstellung in den einander überkreuzenden Teleskopsegmenten verschiebbar sind. Die Diagonalteleskopbeine ermöglichen es zwar, dass die Betonpumpe auch in engen Baustellen aufgestellt werden kann, in denen Fahrzeuge mit vorderen Schwenkbeinen oder Teleskopschwenkbeinen keinen Platz mehr finden würden. Die Verkehrsverhältnisse auf den Straßen und die Platzprobleme auf Baustellen lassen jedoch oft eine Abstützung der Stützausleger in voller Breite quer zum Fahrzeug nicht zu. Es ist daher häufig eine Einschränkung der Abstützbreite erforderlich.

Weiter ist es bei einer fahrbaren Arbeitsmaschine der eingangs angegebenen Art an sich bekannt (US-A 4,609,204), dass der vordere Stützausleger zwei um eine zur Fahrgestellhochachse parallele Gelenkachse gegeneinander verschwenkbare Auslegerpartien aufweist, von denen die eine, innere Auslegerpartie, mit dem Teleskopsegment stets fluchtet, während die andere, das Fußteil tragende äußere Auslegerpartie gegenüber der inneren Auslegerpartie um die Gelenkachse verschwenkbar ist, wobei das fahrgestellfeste Teleskopsegment im Abstand hinter einem Führerhaus angeordnet ist, wobei die äußere Auslegerpartie bei vollständig ausgefahrener innerer Auslegerpartie in eine mit dieser fluchtende Abstützstellung bringbar ist und wobei die äußere Auslegerpartie in der jeweiligen Abstützstellung mit der inneren Auslegepartie verriegelbar ist.

Ausgehend hiervon liegt der Erfindung die Aufgabe zugrunde, die bekannte Arbeitsmaschine dahingehend zu verbessern, dass mit einfachen Mitteln eine Veränderung der Abstützbreite über die Stützausleger möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass es bei den vielen, in der Praxis vorkommenden Fällen, bei denen nur auf der einen Seite der Arbeitsmaschine gearbeitet wird, erstrebenswert ist, den vorderen Stützausleger, der der Arbeitsseite abgewandt ist, möglichst dicht und weit vorne am Fahrerhaus des Fahrgestells abzustützen, mit dem Ziel einer günstigen vorderen Kippkante. Um dies zu erreichen, wird gemäß der Erfindung vorgeschlagen, dass das fahrgestellfeste Teleskopsegment ausstellseitig schräg in Richtung Führerhaus weist und dass die äußere Auslegerpartie zusätzlich bei nur teilweise ausgefahrener innerer Auslegerpartie um die Gelenkachse zum Führerhaus hin in eine parallel zur Fahrgestellachse ausgerichtete Abstützstellung verschwenkbar ist.

Wird der Ausleger aus dem Teleskopsegment ausgefahren und befindet sich die Gelenkachse außerhalb des Teleskopsegments, so kann die äußere Auslegerpartie um die Gelenkachse so gedreht werden, dass sie bis dicht an das Fahrgestell herangeschwenkt und die Arbeitsmaschine dabei schmal abgestützt werden kann. Für die breite Abstützung werden die Auslegerpartien im ausgefahrenen Zustand in vorzugsweise miteinander fluchtender Ausrichtung gegeneinander arretiert. Für besonders breite Abstützungen ist es von Vorteil, wenn die fußteilseitige Auslegerpartie aus mindestens zwei teleskopierbaren Teilen besteht.

Eine erste bevorzugte Erfindungsvariante sieht vor, dass die Gelenkachse in der eingezogenen Transportstellung bei miteinander fluchtenden Auslegerpartien innerhalb und in der ausgestellten Abstützstellung außerhalb des Teleskopsegments angeordnet sind.

Bei größeren Abstützbreiten kann es von Vorteil sein, wenn die Gelenkachse sowohl in der eingezogenen Transportstellung als auch in der ausgestellten Abstützstellung außerhalb des fahrgestellfesten Teleskopsegments angeordnet ist. Hierbei kann die das Fußteil tragende Auslegerpartie in der Transportstellung des Stützauslegers um die Gelenkachse gegen eine Längsseite des Fahrgestells angeschwenkt und in dieser Stellung für den Transport arretiert werden.

Eine weitere bevorzugte Ausgestaltung der Erfindung sieht vor, dass das fahrgestellfeste Teleskopsegment im Abstand hinter einer Vorderachse oder eines Führerhauses am Fahrgestell angeordnet und mit seinem ausstellseitigen Ende schräg oder diagonal in Richtung Vorderachse oder Führerhaus weist. Zweckmäßig sind dabei zwei nach entgegengesetzten Seiten des Fahrgestells weisende, die Fahrgestelllängsachse in verschiedenen Ebenen kreuzende fahrgestellfeste Teleskopsegmente zur Aufnahme je eines Stützauslegers oder einer Auslegerpartie vorgesehen.

Eine weitere abgewandelte Ausführungsvariante der Erfindung sieht vor, dass das Teleskopsegment und der Stützausleger kreisbogenförmig gekrümmt sind. Das Teleskopsegment kann dabei die Fahrzeuglängsachse hinter einer Vorderachse oder einem Führerhaus kreuzen und ausstellseitig schräg in Richtung Vorderachse oder Führerhaus weisen, oder es kann mit einer Tangente parallel zur Fahrzeuglängsachse ausgerichtet sein und ausstellseitig in Fahrtrichtung schräg seitlich nach außen weisen.

Um einen sicheren Stand zu gewährleisten, ist es von Vorteil, wenn ein die Auslegerarme in mindestens einer vorgegebenen Winkelstellung gegen Verdrehen um die Gelenkachse sperrender Verriegelungsmechanismus vorgesehen sind. Weiter wird gemäß der Erfindung ein zwischen den Auslegerpartien angeordneter Schwenkmechanismus vorgeschlagen, der einen Drehmotor oder einen Hydrozylinder aufweisen kann.

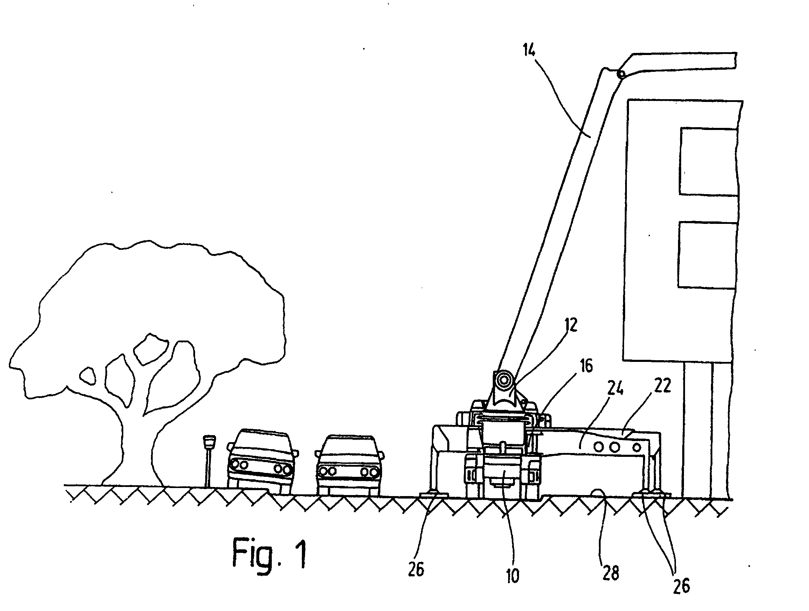

Im folgenden wird die Erfindung anhand der in der Zeichnung dargestellten Ausführungsbeispiele näher erläutert. Es zeigen
- Fig. 1: eine Ansicht einer am Straßenrand abgestellten Autobetonpumpe mit auf der Straßenseite schmal abgestützten Stützauslegern;
- Fig. 2a und b: eine Draufsicht auf das Fahrgestell einer fahrbaren Betonpumpe mit teleskopierbaren vorderen Stützauslegern in eingezogener Transportstellung (Fig. 2a) und in ausgestellter Abstützstellung (Fig. 2b);
- Fig. 3: eine Draufsicht auf ein Fahrgestell einer Betonpumpe mit gegenüber Fig. 2 und 3 abgewandelten teleskopierbaren Stützauslegern.

Die in der Zeichnung dargestellte fahrbare Betonpumpe besteht im wesentlichen aus einem mehrachsigen Fahrgestell 10 mit einem Führerhaus 11, einem an einem vorderachsnahen Mastbock 12 um eine vertikale Achse drehbar gelagerten Betonverteilermast 14 und einer Stützkonstruktion, die einen fahrgestellfesten Tragrahmen 16, zwei am Tragrahmen 16 in diagonal ausgerichteten Ausschubkästen 18 verschiebbare vordere Stützausleger 20 und zwei um lotrechte Achsen 22 verschwenkbare hintere Stützausleger 24 aufweist. Die Stützausleger 20,24 sind mit je einem nach unten ausfahrbaren Fußteil 26 auf dem Boden 28 abstützbar. Zum Verschwenken der hinteren Stützausleger 24 sind hydraulische Arbeitszylinder 30 vorgesehen, deren Kolbenstangen 32 an einer stützauslegerseitigen Anlenkstelle 34 und deren Zylinderteil 36 an einer fahrgestellseitigen Anlenkstelle 38 angelenkt sind.

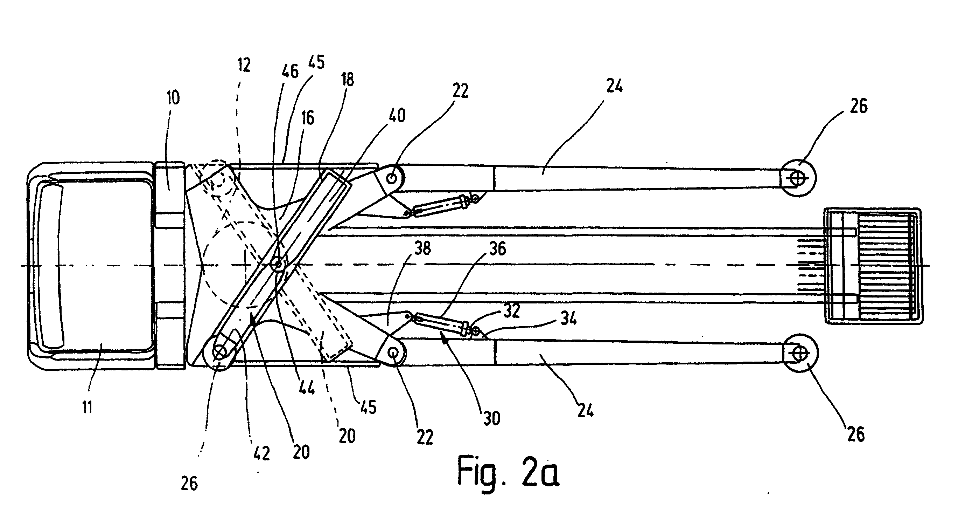

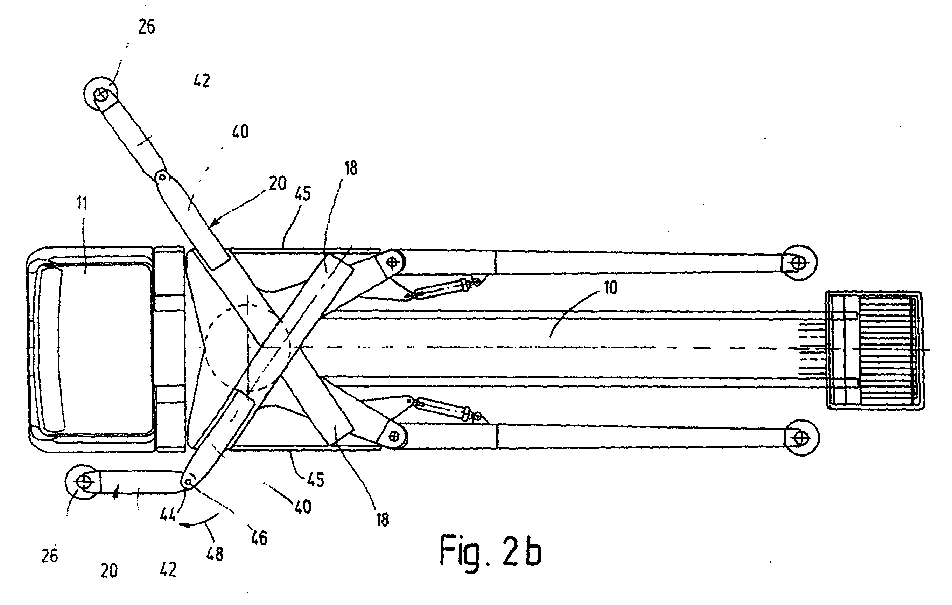

Die vorderen Stützausleger 20 weisen jeweils zwei Auslegerpartien 40,42 auf, die über ein Drehgelenk 44 mit zur Fahrzeughochachse paralleler Gelenkachse 46 miteinander verbunden sind. Bei dem Ausführungsbeispiel nach Fig. 2a, b sind die Auslegerpartien 40,42 in ihrer Länge so dimensioniert, daß in der in Fig. 2a gezeigten eingezogenen Transportstellung das Drehgelenk 44 sich innerhalb des Ausschubkastens 18 befindet und das Fußteil 26 bis zum Längsseitenrand 45 des Fahrgestells 10 zurückgezogen ist. Das Drehgelenk 44 ermöglicht zwei verschiedene Abstützstellungen des vorderen Stützauslegers 20: Die in Fig. 2b oben gezeigte breite Abstützung mit aus dem Ausschubkasten 18 voll ausgefahrenem Stützausleger 20 und miteinander fluchtenden Auslegerpartien 40,42 einerseits sowie die in Fig. 2b unten gezeigte Schmalabstützung bei nur teilweise aus dem Ausschubkasten 18 ausgefahrenem Stützausleger 20 und um die Gelenkachse 46 in Richtung des Pfeils 48 zum Führerhaus 11 hin verschwenkter äußerer Auslegerpartie 42 andererseits.

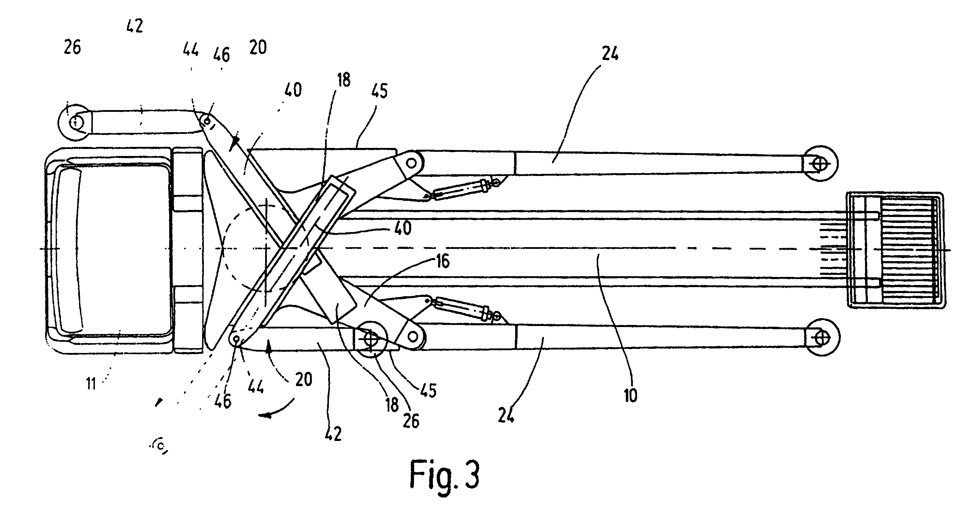

Bei dem in Fig. 3 gezeigten Ausführungsbeispiel befindet sich das Drehgelenk 44 in der eingezogenen Transportstellung des Stützauslegers 20 außerhalb des Ausschubkastens 18, während die äußere Auslegerpartie 42 parallel zum Längsseitenrand 45 des Fahrgestells 10 nach hinten geschwenkt ist (Fig. 3 unten). Auch bei dieser Ausführungsform sind zwei Abstützstellungen möglich: Die im unteren Teil der Fig. 3 in gestrichelten Linien gezeigte Breitabstützung mit fluchtend zueinander ausgerichteten Auslegerpartien 40,42 und die im oberen Teil der Fig. 3 gezeigte Schmalabstützung mit nur teilweise ausgefahrener innerer Auslegerpartie 40 und nach vorne gegen das Führerhaus 11 geschwenkter äußerer Auslegerpartie 42. Die Drehgelenke 44 sind in den verschiedenen Winkelstellungen mit Hilfe eines nicht dargestellten Verriegelungsmechanismus verriegelbar. Außerdem sind in der Zeichnung nicht dargestellte Antriebsmechanismen für die Verschiebung der Stützausleger 20 im Ausschubkasten 18 sowie für das Verschwenken der Auslegerpartien 40,42 um die Gelenkachse 46 vorgesehen.

Zusammenfassend ist folgendes festzustellen: Die Erfindung bezieht sich auf eine fahrbare Arbeitsmaschine, insbesondere eine Autobetonpumpe, mit einem Fahrgestell 10 und mindestens einem in einem am Fahrgestell 10 angeordneten, vorzugsweise horizontal ausgerichteten rohr- oder kastenförmigen Teleskopsegment 18 von einer eingezogenen Transportstellung in mindestens eine ausgestellte Abstützstellung verschiebbaren, an seinem freien Ende mit einem Fußteil 26 bodenseitig abstützbaren Stützausleger 20. Um mit einfachen Mitteln eine Veränderung der Abstützbreite über den Stützausleger 20 zu ermöglichen, wird gemäß der Erfindung vorgeschlagen, daß der Stützausleger 20 mindestens zwei um eine zur Fahrgestellhochachse parallele Gelenkachse 46 verschwenkbare Auslegepartien 40,42 aufweist.

## Patentansprüche

1. Fahrbare Arbeitsmaschine mit einem mindestens eine Vorderachse und eine Hinterachse aufweisenden Fahrgestell (10), mindestens einem am Fahrgestell (10) angeordneten, vorzugsweise horizontal ausgerichteten Teleskopsegment (18), und einem in dem Teleskopsegment (18) zwischen einer eingezogenen Transportstellung und mindestens einer ausgestellten Abstützstellung verschiebbaren, an seinem freien Ende mit einem vorzugsweise ausfahrbaren Fußteil (26) bodenseitig abstützbaren Stützausleger (20), wobei der Stützausleger (20) zwei um eine zur Fahrgestellhochachse parallele Gelenkachse (46) gegeneinander verschwenkbare Auslegerpartien (40, 42) aufweist, von denen die eine, innere Auslegerpartie (40) mit dem Teleskopsegment (18) stets fluchtet, während die andere das Fußteil (26) tragende äußere Auslegerpartie (42) gegenüber der inneren Auslegerpartie um die Gelenkachse (46) verschwenkbar ist, und wobei das fahrgestellfeste Teleskopsegment (18) im Abstand hinter einem Führerhaus (11) angeordnet ist, wobei die äußere Auslegerpartie (42) bei vollständig ausgefahrener innerer Auslegerpartie (40) in eine mit dieser fluchtende Abstützstellung bringbar ist, und wobei die äußere Auslegerpartie (42) in der jeweiligen Abstützstellung mit der inneren Auslegerpartie (40) verriegelbar ist, **dadurch gekennzeichnet, dass** das fahrgestellfeste Teleskopsegment (18) ausstellseitig schräg in Richtung Führerhaus (11) weist, und dass die äußere Auslegerpartie (42) zusätzlich bei nur teilweise ausgefahrener innerer Auslegerpartie (40) um die Gelenkachse (46) zum Führerhaus hin in eine parallel zur Fahrgestellachse ausgerichtete Abstützstellung verschwenkbar ist.

2. Arbeitsmaschine nach Anspruch 1, **dadurch gekennzeichnet, dass** die Gelenkachse (46) in der eingezogenen Transportstellung bei miteinander fluchtender Ausrichtung der Auslegerpartien (40, 42) innerhalb und in der ausgestellten Abstützstellung außerhalb des Teleskopsegments (18) angeordnet ist.

3. Arbeitsmaschine nach Anspruch 1, **dadurch gekennzeichnet, dass** die Gelenkachse (46) sowohl in der eingezogenen Transportstellung als auch in der ausgestellten Abstützstellung außerhalb des Teleskopsegments (18) angeordnet ist.

4. Arbeitsmaschine nach Anspruch 3, **dadurch gekennzeichnet, dass** die das Fußteil (26) tragende äußere Auslegerpartie (42) in der Transportstellung des Stützauslegers (20) um die Gelenkachse (46) gegen eine Längsseite (45) des Fahrgestells (10) anschwenkbar ist.

5. Arbeitsmaschine nach einem der Ansprüche 1 bis 4, **dadurch gekennzeichnet, dass** zwei nach entgegengesetzten Seiten des Fahrgestells weisende, die Fahrgestelllängsachse in verschiedenen Ebenen kreuzende Teleskopsegmente (18) zur Aufnahme je eines Stützauslegers (20) oder einer Auslegerpartie (40) vorgesehen sind.

6. Arbeitsmaschine nach einem der Ansprüche 1 bis 5, **dadurch gekennzeichnet, dass** das Teleskopsegment (18) und der Stützausleger (20) kreisbogenförmig gekrümmt sind, wobei das Teleskopsegment (18) die Fahrgestelllängsachse hinter einem Führerhaus (11) des Fahrgestells kreuzt und ausstellseitig schräg nach außen in Richtung Vorderachse oder Führerhaus weist.

7. Arbeitsmaschine nach einem der Ansprüche 1 bis 5, **dadurch gekennzeichnet, dass** das Teleskopsegment (18) und der Stützausleger (20) kreisbogenförmig gekrümmt sind, wobei die Fahrzeuglängsachse tangential zum Teleskopsegment (18) ausgerichtet ist und das Teleskopsegment (18) ausstellseitig in Fahrtrichtung des Fahrgestells schräg seitlich nach außen weist.

8. Arbeitsmaschine nach einem der Ansprüche 1 bis 7, **dadurch gekennzeichnet, dass** die äußere Auslegerpartie (42) aus mindestens zwei teleskopierbaren Teilen besteht.

9. Arbeitsmaschine nach einem der Ansprüche 1 bis 8, **gekennzeichnet durch** einen die Auslegerpartien (40, 42) in mindestens einer vorgegebenen Winkelstellung gegen Verdrehen um ihre Gelenkachse (46) sperrenden Verriegelungsmechanismus.

10. Arbeitsmaschine nach einem der Ansprüche 1 bis 9, **gekennzeichnet durch** einen zwischen den Auslegerpartien (40, 42) angeordneten Schwenkmechanismus.

11. Arbeitsmaschine nach Anspruch 10, **dadurch gekennzeichnet, dass** der Schwenkmechanismus einen Drehmotor aufweist.

12. Arbeitsmaschine nach Anspruch 11, **dadurch gekennzeichnet, dass** der Schwenkmechanismus einen Hydrozylinder aufweist.

## Claims

1. Mobile work machine with a vehicle chassis (10) with at least one front axle and one rear axle, at least one telescope segment (18) provided on the vehicle chassis (10), preferably oriented horizontally, and a support strut (20) moveable between a retracted transport position and at least one extended supporting position, having on its free end a preferably extendable foot part (26) for supporting on the ground, wherein the support strut (20) includes two strut parts (40, 42) pivotable with respect to each other about a linkage axis (46) which is parallel to the vehicle vertical axis, of which strut parts the inner strut part (40) is always in alignment with the telescope segment (18), while the other, outer strut part (42) which carries the foot part (26) is pivotable with respect to the inner strut part (40) about the linkage axis (46), and wherein the vehicle chassis-fixed telescope segment (18) is provided spaced apart from and behind a driver cabin (11), wherein the outer strut part (42) is adapted to be brought into an aligned support position with the inner strut part (40) when the latter is fully extended, and wherein the outer strut part (42) is adapted to be locked to the inner strut part (40) in the support position, **characterized in that** the chassis-fixed telescope segment (18) is oriented at the extension side diagonally in the direction of the driver cabin (11), and **in that** the outer strut part (42) is additionally pivotable about the linkage axis (46) toward the driver cabin into a support position parallel to the vehicle axis when the inner strut part (40) is only partially extended.

2. Work machine according to Claim 1, **characterized in that** the linkage axis (46) is arranged within the telescope segment (18) in the retracted transport position with the strut parts (40, 42) being aligned with each other and outside of the telescope segment (18) in the extended supporting position.

3. Work machine according to Claim 1, **characterized in that** the linkage axis (46) is located outside the telescope segment (18) both in the retracted transport position as well as in the extended support position.

4. Work machine according to Claim 3, **characterized in that** the outer strut part (42) carrying the foot part (26) in the transport position of the support strut (20) is pivotable about the linkage axis (46) against a longitudinal side (45) of the vehicle chassis (10).

5. Work machine according to one of Claims 1 through 4, **characterized in that** two telescope segments (18) facing opposite sides of the vehicle chassis and crossing over the vehicle chassis longitudinal axis in different levels are provided for receiving respectively a support strut (20) or a strut part (40).

6. Work machine according to one of Claims 1 to 5, **characterized in that** the telescope segment (18) and the support strut (20) are curved arc-like, wherein the telescope segment (18) crosses diagonally over the vehicle longitudinal axis behind the driver cabin (11) of the chassis and is oriented at the extension side diagonally outwards in the direction of the front axle or driver cabin.

7. Work machine according to one of Claims 1 to 5, **characterized in that** the telescope segment (18) and the support strut (20) are curved arc-like, wherein the vehicle longitudinal axis is aligned tangentially to the telescope segment (18) and the telescope segment (18) is oriented at the extension side diagonally outwards in the direction of travel of the chassis.

8. Work machine according to one of Claims 1 through 7, **characterized in that** the outer strut part (42) is comprised of at least two telescopic parts.

9. Work machine according to one of Claims 1 through 8, **characterized by** a locking mechanism for locking the strut parts (40, 42) in at least one predetermined angular position against rotation about their linkage axis (46).

10. Work machine according to one of Claims 1 through 9, **characterized by** a pivot mechanism disposed between the strut parts (40, 42).

11. Work machine according to Claim 10, **characterized in that** the pivot mechanism includes a rotary motor.

12. Work machine according to Claim 11, **characterized in that** the pivot mechanism includes a hydraulic cylinder.

## Revendications

1. Machine de travail mobile dotée d'un châssis (10) présentant au moins un essieu avant et un essieu arrière, d'au moins un segment télescopique (18) placé sur le châssis (10), orienté horizontalement de préférence, et d'un bras d'appui (20), pouvant s'appuyer du côté du sol à son extrémité libre avec un pied (26) de préférence déplaçable, bras d'appui (20) déplaçable dans le segment télescopique (18) entre une position de transport rentrée et au moins une position d'appui projetée, le bras d'appui (20) présentant deux parties de bras (40, 42) pivotant l'une par rapport à l'autre autour d'un axe articulé (46) parallèle à l'axe vertical du châssis, dont l'une intérieure (40) des deux parties de bras s'aligne en permanence sur le segment télescopique (18), alors que l'autre partie de bras extérieure (42) portant le pied (26) est pivotante autour de l'axe articulé (46) par rapport à la partie de bras intérieure, et le segment télescopique (18) fixé au châssis étant disposé à écart derrière une cabine de conducteur (11), la partie de bras extérieure (42) pouvant être amenée, lorsque la partie de bras intérieure (40) est entièrement déployée, en une position d'appui alignée sur celle-ci, et la partie de bras extérieure (42) étant verrouillable avec la partie de bras intérieure (40) dans la position d'appui respective, **caractérisée en ce que** le segment télescopique mobile (18) fixé au châssis s'étend, du côté projeté, de manière inclinée dans la direction de la cabine du conducteur (11), et **en ce que** la partie de bras extérieure (42) est pivotante, en outre lorsque la partie de bras intérieure (40) n'est sortie que partiellement, autour de l'axe articulé (46) vers la cabine de conducteur dans une position d'appui parallèle à l'axe du châssis.

2. Machine de travail selon la revendication 1, **caractérisée en ce que,** en position de transport rentrée lorsque les parties de bras (40, 42) sont alignées entre elles, l'axe articulé (46) est disposé à l'intérieur du segment télescopique (18), et, en position d'appui projetée, il est disposé à l'extérieur du segment télescopique (18).

3. Machine de travail selon la revendication 1, **caractérisée en ce que,** aussi bien en position de transport rentrée qu'en position d'appui projetée, l'axe articulé (46) est disposé à l'extérieur du segment télescopique (18).

4. Machine de travail selon la revendication 3, **caractérisée en ce que,** en position de transport du bras d'appui (20), la partie de bras extérieure (42) portant le pied (26) peut pivoter autour de l'axe articulé (46) vers un côté longitudinal (45) du châssis (10).

5. Machine de travail selon l'une des revendications 1 à 4, **caractérisée en ce que** deux segments télescopiques (18), s'étendent vers des côtés opposés du châssis, et croisant l'axe longitudinal du châssis à différents niveaux, sont prévus pour loger chacun un bras d'appui (20) ou une partie de bras (40).

6. Machine de travail selon l'une des revendications 1 à 5, **caractérisée en ce que** le segment télescopique (18) et le bras d'appui (20) sont courbés en forme d'arc de cercle, le segment télescopique (18) croisant l'axe longitudinal du châssis derrière une cabine de conducteur (11) du châssis s'étendent, du côté projeté, de manière inclinée vers l'extérieur en direction de l'essieu avant ou de la cabine de conducteur.

7. Machine de travail selon l'une des revendications 1 à 5, **caractérisée en ce que** le segment télescopique (18) et le bras d'appui (20) sont courbés en forme d'arc de cercle, l'axe longitudinal du châssis étant orienté tangentiellement par rapport au segment télescopique (18), et le segment télescopique (18) s'étendent, du côté projeté, de manière inclinée latéralement vers l'extérieur dans le sens de marche du châssis.

8. Machine de travail selon l'une des revendications 1 à 7, **caractérisée en ce que** la partie de bras extérieure (42) est composée d'au moins deux pièces télescopiques.

9. Machine de travail selon l'une des revendications 1 à 8, **caractérisée par un** mécanisme de verrouillage bloquant les parties de bras (40, 42) dans au moins une position angulaire prédéfinie, par rapport au pivotement de leur axe articulé (46).

10. Machine de travail selon l'une des revendications 1 à 9, **caractérisée par** un mécanisme de basculement disposé entre les parties de bras (40, 42).

11. Machine de travail selon la revendication 10, **caractérisée en ce que** le mécanisme de basculement présente un moteur-couple.

12. Machine de travail selon la revendication 11, **caractérisée en ce que** le mécanisme de basculement présente un cylindre hydraulique.
